Europäisches Patentamt

European Patent Office

Office européen des brevets

(11) Veröffentlichungsnummer: **0 312 776 B1**

(12) **EUROPÄISCHE PATENTSCHRIFT**

(45) Veröffentlichungstag der Patentschrift: **23.10.91**

(21) Anmeldenummer: **88115170.8**

(22) Anmeldetag: **16.09.88**

(51) Int. Cl.⁵: **F16B 13/14**

(54) Verfahren zur Befestigung von Ankerstangen.

(30) Priorität: **21.10.87 DE 3735592**

(43) Veröffentlichungstag der Anmeldung:
**26.04.89 Patentblatt 89/17**

(45) Bekanntmachung des Hinweises auf die
Patenterteilung:
**23.10.91 Patentblatt 91/43**

(84) Benannte Vertragsstaaten:
**DE ES FR GB IT NL SE**

(56) Entgegenhaltungen:
**EP-A- 0 199 671**
**FR-A- 2 138 796**
**FR-A- 2 191 018**
**GB-A- 1 127 913**
**GB-A- 1 363 828**

(73) Patentinhaber: **HILTI Aktiengesellschaft**

**FL-9494 Schaan(LI)**

(72) Erfinder: **Leibhard, Erich**
**Bauweberstrasse 2**
**W-8000 München 71(DE)**

(74) Vertreter: **Wildi, Roland**
**Hilti Aktiengesellschaft Patentabteilung**
**FL-9494 Schaan(LI)**

**Beschreibung**

Die Erfindung betrifft ein Verfahren zur Befestigung von Ankerstangen in einer Bohrung, die wenigstens teilweise mit Flüssigkeit angefüllt ist, mittels einer aushärtbaren Ein- oder Mehrkomponenten-Haftmasse, wobei eine die Haftmasse enthaltende Patrone der Bohrung zugeführt wird, die beim anschliessenden Eintreiben der Ankerstange zerstört wird.

Im Unterwasserbereich, beispielsweise im Zusammenhang mit Befestigungen an Fundamenten, Sockeln, Konsolen und dgl., wird anstelle der mittels mechanisch verspreizenden Ankern erzielten Befestigungspunkte, vermehrt auf spreizdruckfreie Befestigungen übergangen. Zur Erstellung solch spreizdruckfreier Befestigungen ist insbesondere die Verwendung von Zementmörtel und die Verwendung von Ein- oder Mehrkomponenten-Haftmassen bekannt. Diese bekannten Arten von Befestigungen lassen sich aber nicht ohne Probleme auf den Unterwasserbereich übertragen.

Die Verwendung von Zementmörtel hat den Nachteil, dass er sich im Unterwassereinsatz zu stark verdünnt und zerfliesst. Die Haftmassen haben den Nachteil, dass das Wasser mit der Haftmasse eine Emulsion bildet, so dass die Haftmasse nicht mehr in der Lage ist, die von ihr geforderten adhäsiven Eigenschaften aufzubringen. In beiden Fällen sind unzureichende Verankerungswerte die Folge der Verwendung dieser bekannten Lösungen im Unterwassereinsatz.

Ein Befestigungsverfahren der vorgenannten Art ist beispielsweise aus der FR-A-2 138 796 bekannt. Hier wird die Bohrung mit einer Haftmasse enthaltenden Patrone versehen, wobei anschliessend in die Bohrung eine Buchse mit einer zweiten ebenfalls Haftmasse enthaltenden Patrone eingeführt wird. Die zu befestigende Ankerstange dient dem Zerstören der Patronen sowie dem Vermischen der damit freiwerdenden Haftmasse. Für den Unterwassereinsatz ist dieses bekannte Verfahren allerdings nicht geeignet, da die im Bohrloch vorhandene Patrone mit Haftmasse nicht in der Lage ist, vor dem Einführen der Buchse mit der zweiten Patrone sämtliches Wasser aus dem Bohrloch zu verdrängen.

Der Erfindung liegt die Aufgabe zugrunde, ein Verfahren zum spreizdruckfreien Befestigen von Ankerstangen in mit Flüssigkeiten angefüllten Bohrungen, insbesondere im Unterwasserbereich, anzugeben, mit dem hohe und zuverlässige Verankerungswerte erzielbar sind.

Erfindungsgemäss wird die Aufgabe dadurch gelöst, dass vor dem Zuführen der Patrone die Bohrung teilweise mit fliessfähiger Haftmasse angefüllt wird, derart, dass beim Zuführen der Patrone die fliessfähige Haftmasse zusammen mit der Flüssigkeit nach aussen zur Bohrungsmündung hin verdrängt wird.

Mittels geläufiger Auspressgeräte, welche gegebenenfalls mit einem verlängerten Ausgussstutzen versehen sind, wird die fliessfähige Haftmasse der Bohrung zugeführt. Nachdem die Haftmasse zweckmässigerweise eine höhere Dichte als die, beispielsweise aus Wasser bestehende, Flüssigkeit aufweist, bleibt die Haftmasse auch in Bohrungen die vertikal nach unten gerichtet sind im Bohrlochgrund liegen. Hinzu kommen die adhäsiven Eigenschaften dieser Haftmasse, welche zusätzlich dazu beitragen, dass diese nach deren Zuführung in die Bohrung an Ort und Stelle verbleibt.

Durch das Einführen der Haftmasse enthaltenden Patrone in die Bohrung, wird die eingeführte fliessfähige Haftmasse durch den zwischen Patrone und Bohrlochwandung bestehenden Ringspalt nach aussen zur Bohrlochmündung hin verdrängt. Dieser Verdrängungsvorgang hat zur Folge, dass auch sämtliches Wasser aus der Bohrung hinaus verdrängt wird. Vor dem Einführen der Ankerstange ist die Bohrung demnach mit einem völlig wasserfreien Pfropfen, bestehend aus Patrone und fliessfähiger Haftmasse, angefüllt. In diesen Pfropfen hinein wird die Ankerstange eingetrieben, was zur Folge hat, dass die Patrone zerstört wird, wobei aber die fliessfähige Haftmasse samt den Patronenteilen während des gesamten Eintreibvorganges eine derart ausreichende Abdichtung zur Ankerstange hin bildet, dass Wasser nicht zu der aufgrund des Zerstörens der Patrone freigelegten Haftmasse dringen kann.

Vorzugsweise wird die Bohrung mit einem dem 0,1- bis 0,3-fachen ihres Volumens entsprechenden Menge mit fliessfähiger Haftmasse angefüllt. Diese Menge an Haftmasse stellt einerseits sicher, dass der Ringspalt zwischen Patrone und Bohrungswandung zumindest ausreichend ausgefüllt wird und folglich eine vollständige Verdrängung der Flüssigkeit aus der Bohrung stattfindet. Dieser Vorgang wird weiter verbessert, wenn zweckmässigerweise die Patrone ein im wesentlichen der Bohrung entsprechendes Volumen besitzt. Die Länge und der Querschnitt der Patrone entsprechen damit annähernd der Länge und dem Querschnitt der Bohrung, so dass zwischen Patrone und Oberfläche der Bohrung nur geringe Freiräume verbleiben.

Zur Durchführung des Verfahrens wird vorzugsweise eine Zweikomponenten-Haftmasse sowohl als fliessfähige Haftmasse als auch als Haftmasse in der Patrone verwendet. Bei der Verwendung einer solchen Zweikomponenten-Haftmasse als fliessfähige Haftmasse erfolgt mit Vorteil die Vermischung vor deren Zuführung in die Bohrung und zwar mittels der gebräuchlichen Auspressgeräte, welche gegebenenfalls für den hier in Rede stehenden Unterwassereinsatz geringfügig überarbeitet sein können, beispielsweise durch Verwendung eines längeren Auspressstutzens. Bei den Patronen sind die einzelnen Komponenten in an sich bekannter Weise innerhalb getrennter Abteile, gegebenenfalls vermengt mit Füllstoffen, angeordnet.

Als Zweikomponenten-Haftmassen, sowohl bei Verwendung als fliessfähige Haftmasse als auch zur Anordnung in der Patrone, werden vorzugsweise Epoxyacrylat-Verbindungen verwendet. Nebst dem aufgrund seiner flüssigkeitsresistenten Eigenschaften mit Vorteil Anwendung findende Epoxyacrylat kann vor allem Styrol als weiterer Haftmassen-Anteil Anwendung finden.

Die Erfindung wird nachstehend anhand einer Zeichnung, die ein Ausführungsbeispiel wiedergibt, näher erläutert. Es zeigen:

Fig. 1    eine teilweise mit fliessfähiger Haftmasse angefüllte, unter Wasser stehende Bohrung;

Fig. 2    die Bohrung nach Fig. 1 mit dieser zugeführter, Haftmasse enthaltender Patrone;

Fig. 3    die Anordnung nach Fig. 2 nach dem Eintreiben einer Ankerstange.

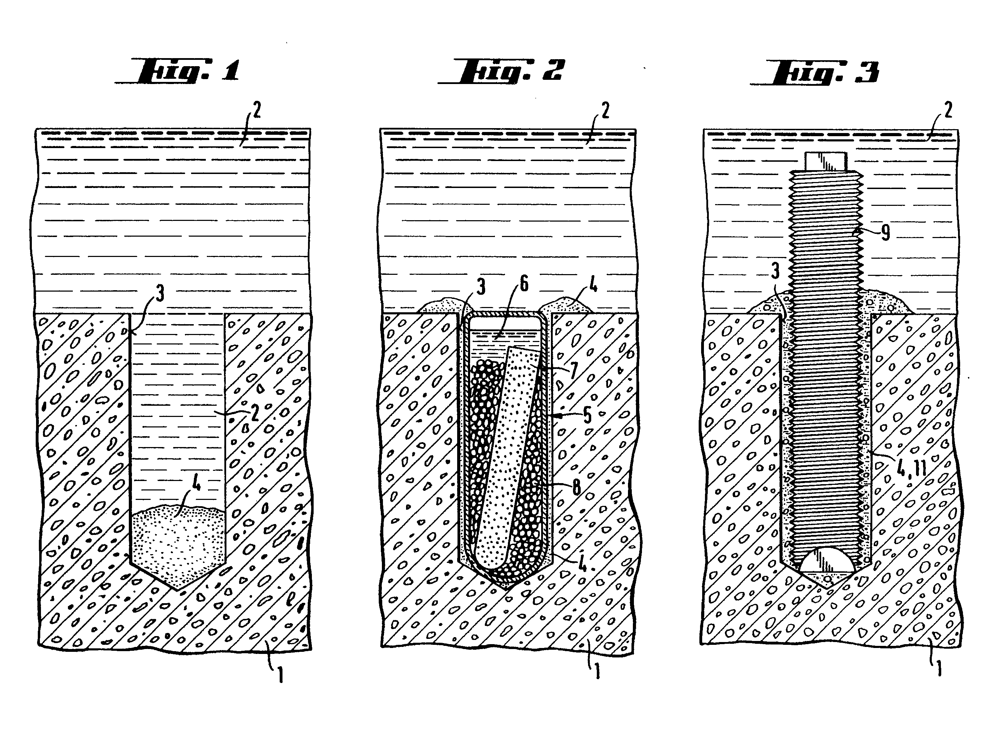

In Fig. 1 ist eine Betonmauer 1 im Schnitt dargestellt, welche beispielsweise von Wasser 2 abgedeckt ist. Die Betonmauer 1 ist mit einer Bohrung 3 versehen, in der das Wasser 2 ansteht. In den Grund der Bohrung 3 ist eine fliessfähige Zweikomponenten-Haftmasse 4 eingebracht worden. Diese Haftmasse 4 füllt die Bohrung 3 etwa zu einem Viertel; im Rest der Bohrung befindet sich Wasser 2.

Nach dem Einbringen der fliessfähigen Haftmasse 4 wird, wie die Fig. 2 zeigt, eine Patrone 5, beispielsweise mit Glas-Mantel, der Bohrung 3 zugeführt. Das Volumen der Patrone 5 entspricht annähernd dem Volumen der Bohrung 3, so dass beim Zuführen der Patrone 5 das sich in der Bohrung 3 befindliche Wasser 2 aus der Bohrung 3 verdrängt wird. Die Haftmasse 4 wird beim Eintauchen der Patrone 5 entlang des zwischen Patrone 5 und Wandung der Bohrung 3 bestehenden Spaltes zur Mündung der Bohrung 3 hin gepresst und fördert dabei das im Spalt befindliche restliche Wasser 2 nach aussen.

In der in sich geschlossenen Patrone 5 befindet sich wiederum eine Zweikomponenten-Haftmasse, wobei die Komponenten getrennt angeordnet sind. So ist in der Patrone 5 beispielsweise härtbares Epoxyacrylatharz 6, Füllstoff 8 und eine zerstörbare Ampulle mit einer zweiten Harzkomponente 7 angeordnet.

Durch Eintreiben einer Ankerstange 9 unter Drehung in die Bohrung 3 wird die Patrone 5 zerstört und deren Inhalt mit den Teilen der Patrone 5 zu einer aushärtbaren Haftmasse 11 vermischt, die sich dabei mit der zuvor eingebrachten fliessfähigen Haftmasse 4 vermengt.

## Patentansprüche

1. Verfahren zur Befestigung von Ankerstangen (9) in einer Bohrung (3), die wenigstens teilweise mit Flüssigkeit (2) angefüllt ist, mittels einer aushärtbaren Ein- oder Mehrkomponenten-Haftmasse (11), wobei eine die Haftmasse (11) enthaltende Patrone (5) der Bohrung (3) zugeführt wird, die beim anschliessenden Eintreiben der Ankerstange (9) zerstört wird, **dadurch gekennzeichnet,** dass vor dem Zuführen der Patrone (5) die Bohrung (3) teilweise mit fliessfähiger Haftmasse (4) angefüllt wird, derart, dass beim Zuführen der Patrone (5) die fliessfähige Haftmasse (4) zusammen mit der Flüssigkeit nach aussen zur Bohrungsmündung hin verdrängt wird.

2. Verfahren nach Anspruch 1, dadurch gekennzeichnet, dass die Bohrung (3) mit einer dem 0,1- bis 0,3-fachen ihres Volumens entsprechenden Menge mit fliessfähiger Haftmasse angefüllt wird.

3. Verfahren nach Anspruch 1 oder 2, dadurch gekennzeichnet dass die Patrone (5) ein im wesentlichen der Bohrung (3) entsprechendes Volumen besitzt.

4. Verfahren nach einem der Ansprüche 1 bis 3, dadurch gekennzeichnet, dass eine Zweikomponenten-Haftmasse (4, 11) verwendet wird.

5. Verfahren nach Anspruch 4, dadurch gekennzeichnet, dass eine Zweikomponenten-Haftmasse (4, 11) auf der Basis einer Epoxyacrylat-Verbindung verwendet wird.

## Claims

1. A method of fastening anchor rods (9) in a bore (3), which is at least partially filled with liquid (2), by means of a hardenable single- or multi-component adhesive composition (11), in which respect a cartridge (5) containing the adhesive composition (11) and which is destroyed upon the subsequent driving-in of the anchor rod (9) is inserted into the bore (3), characterised in that prior to the insertion of the cartridge (5) the bore (3) is partially filled with flowable adhesive composition (4), in such a way that upon the insertion of the cartridge (5) the flowable adhesive composition (4) is displaced together with the liquid outwards towards the mouth of the bore.

2. A method according to claim 1, characterised in that the bore (3) is filled with flowable adhesive composition with an amount corresponding to 0.1 up to 0.3 times its volume.

3. A method according to claim 1 or 2, characterised in that the cartridge (5) has a volume substantially corresponding to the bore (3).

4. A method according to one of claims 1 to 3, characterised in that a two-component adhesive composition (4, 11,) is used.

5. A method according to claim 4, characterised in that a two-component adhesive composition (4, 11) based on an epoxyacrylate compound is used.

## Revendications

1. Procédé de fixation de barres d'ancrage (9) dans un trou de forage (3) qui est rempli au moins partiellement d'un liquide (2), au moyen d'une masse adhésive durcissable à un ou plusieurs composants (11), une cartouche (5) contenant la masse adhésive (11) étant introduite dans le trou (3) et détruite lors de l'enfoncement consécutif de la barre d'ancrage (9), **caractérisé en ce** que, avant l'introduction de la cartouche (5), le trou (3) est partiellement rempli de masse adhésive coulante (4), de sorte que lors de l'introduction de la cartouche (5) la masse adhésive (4) est déplacée, conjointement avec le liquide, vers l'extérieur en direction de l'embouchure du trou.

2. Procédé selon la revendication 1, caractérisé en ce que le trou (3) est rempli d'une quantité de masse adhésive coulante qui correspond à 0,1 à 0,3 fois son volume.

3. Procédé selon l'une des revendications 1 ou 2, caractérisé en ce que la cartouche (5) possède un volume qui correspond sensiblement au trou (3).

4. Procédé selon l'une des revendications 1 à 3, caractérisé en ce que l'on utilise une masse adhésive (4, 11) à deux composants

5. Procédé selon la revendication 4, caractérisé en ce que l'on utilise une masse adhésive (4, 11) à deux composants à base d'un composé époxy-acrylate.

**Fig. 1**    **Fig. 2**    **Fig. 3**

EP 0 312 776 B1